# EUROPEAN PATENT APPLICATION

(11) **EP 1 962 197 A1**
(43) Date of publication of application: **27.08.2008**
(21) Application number: 05819857.3
(22) Date of filing: 15.12.2005
(51) Int. Cl.: G06F 13/00, G06F 15/00

(54) **WEB ACCESS MONITORING METHOD AND ITS PROGRAM**

(71) Applicant: Netstar, Inc., Shibuya-ku Tokyo 1500013 (JP)
(72) Inventor: OKAMOTO, Keiichi, Shibuya-Ku, Tokyo 1500013 (JP); NAEKI, Ryu, Shibuya-Ku, Tokyo 1500013 (JP)
(74) Representative: Hooiveld, Arjen Jan Winfried
(86) International application number: PCT/JP2005/023438
(87) International publication number: WO 2007/069338

(57) **Abstract**

A centralized control server for controlling each computer includes a step for setting monitoring rules including warning conditions and processing forms at the time of warning for web accesses which are improper from a business or educational point of view. A client computer is provided with a filtering module for monitoring web accesses. Said filtering module includes a step for analyzing the communication contents of the client computer and detecting the occurrence of a web access to an object to be monitored prescribed by the monitoring rules, a step for counting an access quantity at the time of detection of the web access, and a step for issuing warning processing in real time to a user or an administrator in accordance with the processing forms at the time of warning when it is judged that the access quantity has reached an upper limit value prescribed by the warning conditions.

## Description

### TECHNICAL FIELD

The present invention relates to a method and associated system for monitoring web accesses in a client computer.

### BACKGROUND ART

The TCP/IP (Transmission Control Protocol/Internet Protocol), which is a WWW (World Wide Web) communication protocol, is used for the transmission and reception of information on the Internet. The HTTP (Hyper Text Transfer Protocol), which is prescribed as the upper layer of the TCP/IP, is used for the transmission and reception of web data. A client receiving the services of a WWW server system inputs a URL (Uniform Resource Locators) into a WWW browser in order to gain access to the website identified by the URL.

Access to websites is usually not limited, thereby allowing a user to view various kinds of information which is open to the public on worldwide websites through the Internet, and such information is utilized not only by ordinary families and but also in classrooms and in business. The Internet provides a convenient way of obtaining information, but at the same time, involves harmful elements, because of its limitless information viewability, such as the viewing of harmful information by children and minors and the viewing of information other than that intended for business by company employees during business hours.

As a method for limiting web viewing, for example, a method (URL filtering method) is provided in which the URLs of access-forbidden sites or the URLs of access-allowed sites are registered in advance, and a URL filtering device (or a filtering program operating on each computer) regulates access to websites on the basis of URL registration information, thereby regulating access to specific websites. Another method is known in which terms of forbidden information (such as forbidden keywords) are registered in advance, and when the forbidden keywords are included in information received from websites, its display is forbidden and the URL of the transmission source of the information is registered to regulate any access later. Generally, a system for regulating web viewing can perform filtering with monitoring provided by its settings only.

Conversely, a method is known in which a function of monitoring web accesses, and not regulating web viewing (i.e., performing access regulation), is provided in order to allow an administrator to determine the state of viewing on each terminal, the method including a form of performing monitoring using a device (a "data relay device" such as a server, a URL filtering device, and a gateway) installed between a LAN (Local Area Network) and the Internet and a form of monitoring performing by each client computer (using a filtering program or the like).

One method for monitoring web access using a data relay device is described in Non-Patent Document 1. The use report creation tool described therein is a tool for creating a report for an administrator and has the functions of, for example, recording web access information from each client computer using the data relay device, analyzing the communication contents on the basis of the log data, and creating image data indicating the state of access by category or by time in the form of a report for the administrator. The analysis of the log data can be performed by instructions or by time designation as needed by the administrator (See Non-Patent Document 1).

Conversely, a method for monitoring using each client computer is described in Non-Patent Document 2 which discloses features allowing an administrator to determine the state of access by installing an agent module in a client computer, recording web access information as log data in accordance with a preset log correction policy by the module, and displaying log information on a screen indicating as to, for example, from what terminal of what section, by what log-on user name, when, how long, and to what sites accesses have been made.

Non-Patent Document 2 further discloses features allowing the administer, by forbidding unauthorized sites to be viewed by keyword setting, recording information when a user attempted to view the forbidden sites as an alarm log, and displaying the information in the alarm log in red, to determine the log information (See Non-Patent Document 2).

### <DOCUMENT LIST>

(Non-Patent Document 1)
   The home page of NetSTAR Inc. (the web site describing the functional overview of the product named "LogLyzer"), [searched on October 20, 2005], Internet <URL: http:/www.netstar-inc.com/loglyzer/>
(Non-Patent Document 2)
   The home page of MOTEX Inc. (the web page describing the web access monitoring function of the product named "LanScopeCat") [searched on October 20, 2005],
   Internet < http://www.motex.co.jp/product/catweb.sb.tml >

### SUMMARY OF INVENTION

### (Problems to be solved by the invention)

As described above, whenmonitoring (or regulating) webviewing, the regulation of web viewing and the log storage of web accesses are performed using a URL filtering device installed between the LAN and the Internet and a filtering program operating on each computer.

A system regulating web viewing is advantageous in that web viewing can be automatically regulated by forbidding access to unauthorized sites such as the viewing of harmful information by children and minors and the viewing of information other than that intended for business by company employees during business hours. However, it is disadvantageous in that sometimes necessary web pages cannot be viewed at necessary times, reducing productivity.

A system monitoring web viewing, however, is advantageous in that it does not reduce productivity, reduces unnecessary web viewing through a warning to a user, and can regulate web viewing by settings. However, in conventional monitoring methods as disclosed in Non-Patent Documents 1 and 2, although the regulation of web viewing and web access log storage can be performed, later warnings to a user have to be performed through another means such as an e-mail or word of mouth in accordance with the administrator's own judgment from the web access logs. On analysis of the web accesses, the administrator has to analyze the log personally, potentially worrying the administrator and providing a warning to the user with no immediacy.

The present invention has been developed on the basis of the above-described issues. It is an object of the present invention to provide a web access monitoring method and associated program capable of forbidding web viewing which is unnecessary or improper from a business or educational point of view. It is another object of the present invention to provide a web access monitoring method and associated program capable of saving time and effort in log analysis by an administrator and increasing the immediacy of any warning to a user.

### (Means for solving the problems)

The present invention relates to a web access monitoring method and associated program in a computer system having a centralized control server for controlling client computers in a local area network. The above-described object of the present invention is achieved, for the method, by allowing said centralized control server to include a step for setting monitoring rules, including warning conditions and processing forms, at the time of warning for web accesses which are unnecessary or improper from a business or educational point of view, providing said client computer with a filtering module for performing monitoring processing on web accesses originating from the computer, and said filtering module includes an analysis step for analyzing the communication contents of said client computer and detecting the occurrence of a web access to an object to be monitored as prescribed by said monitoring rules, a counting step for counting an access quantity at the time of detection of said web access, and a warning step for issuing warning processing in real time to a user or an administrator or both in accordance with said processing forms at the time of warning when it is judged that said access quantity has reached an upper limit value prescribed by said warning conditions.

The above-described object of the present invention is achieved more effectively by allowing said filtering module to communicate with said centralized control server to acquire said monitoring rules at the time of starting of said client computer and to further include a step for acquiring the latest monitoring rules from said centralized control server at appropriate times while said client computer is connected with said local area network, allowing said monitoring rules to be set by category indicating the type of pieces of web information, allowing said filtering module to perform said monitoring processing targeting web accesses to the pieces of web information belonging to the category set in the monitoring rules, allowing said counting step to count said access quantity by category, allowing said counting step to initialize the counted value of the access quantity when said warning step has issued said warning processing, providing a URL database in which pieces of URL information present on the Internet are classified by category and are registered with the category and URL associated with each other, allowing said filtering module to further include a switching step for detecting a URL to be accessed by analyzing said communication contents, judging the category to which said URL to be accessed belongs by referring to said URL database, and switching the contents of saidmonitoring processing in accordance with said category to which said URL to be accessed belongs, and including, as the contents of said monitoring processing switched by said switching step, at least either one of objects to be monitored, said warning conditions, and said processing forms at the time of warning, respectively.

The above-described object of the present invention is achieved even more effectively by allowing said warning step to issue warning processing to said user and transmit notification information to said centralized control server when it is set that the user and the administrator are notified by said monitoring rules, allowing said centralized control server to perform, when it has received said notification information, notification processing to said administrator in accordance with said notification forms set in said monitoring rules, allowing said warning step to store said notification information when the transmission of said notification information to said centralized control server has failed, monitoring the condition of said local area network, and attempting the re-transmission processing of said notification information as soon as the condition changes, respectively.

The above-described object of the present invention is achieved even more effectively again by allowing said monitoring forms prescribed in said monitoring rules to include at least either one of a form of monitoring all web accesses as objects to be monitored, a form of monitoring only allowed categories out of all the categories indicating the type of pieces of web information as objects to be monitored, a form of monitoring only regulated categories out of all the categories as objects to be monitored, a form of monitoring only categories for which the access regulation is invalidated out of said regulated categories or regulated URLs as objects to be monitored, and a form of monitoring only designated individual categories as objects to be monitored, allowing said monitoring rules to be set in a plurality of ways for one client, allowing said filtering module to allow a counter for each monitoring ID for discriminating said plurality of monitoring rules to store said access quantity in said counting step, compare the counter value for each said monitoring ID to an upper limit value for each said monitoring ID prescribed in said monitoring conditions, respectively, in said warning step, and when any counter exceeds the upper limit value, perform said warning processing in accordance with said processing forms at the time of warning prescribed in the monitoring rules of the monitoring ID, allowing said access quantity measured in said counting step to be an access quantity which is selected from the number of web viewing, the number of data transmissions, and the size of transmission data and is set in said monitoring rules, allowing either one of a plurality of filtering elements including access regulation, writing regulation to external information resources such as an electronic bulletin board, and permission to access to be designated and to be set as a filtering policy in said monitoring rules, and allowing said warning step to issue said warning processing and control the regulation or non-regulation of said web access in accordance with said filtering policy set in said monitoring rules, respectively.

The above-described object of the present invention is achieved, for the program, by allowing said client computer to achieve a function of communicating with said centralized control server to acquire monitoring rules in which rules including warning conditions and processing forms at the time of warning for web accesses which are unnecessary or improper from a business or educational point of view are defined, a function of analyzing the communication contents of said client computer and detecting the occurrence of a web access to an object to be monitored prescribed by said monitoring rules, a function of counting an access quantity at the time of the detection of said web access, and a function of issuing warning processing in real time to a user or an administrator or both in accordance with said processing forms at the time of warning when it is judged that said access quantity has reached an upper limit value prescribed by said warning conditions.

### (Effects of the invention)

According to the present invention, the filtering module (program) provided in a client computer monitors web accesses originating from the client computer in accordance with the monitoring rules set in advance by the centralized control server and warns a user or an administrator when the warning conditions set in the monitoring rules are fulfilled, thereby restricting forbidden web viewing which is unnecessary or improper from a business or educational point of view, saving time and efforts in log analysis by the administrator and increasing immediacy in providing a warning to the user.

The filtering module (program) provided in the client computer performs monitoring, allowing for the continuation of monitoring processing even when the client computer is taken out of the LAN or moved anywhere by the user. Furthermore, the monitoring rules can be set by category and monitoring is performed by category, allowing desired monitoring rules to be set easily.

### BRIEF DESCRIPTIONS OF THE DRAWINGS

Fig. 1 is a schematic diagram illustrating one example of the overall configuration of a computer system to which the web access monitoring method of the present invention is applied.
Fig. 2 is a basic block diagram illustrating an example of a configuration of the web access monitoring system 10 shown in Fig. 1.
Fig. 3 is a flowchart illustrating a basic operation example of the web monitoring system of the present invention.
Fig. 4 is a flowchart illustrating the outline of the web access monitoring processing of the present invention.
Fig. 5 is a flowchart illustrating an operation example of the present invention at the time of acquisition of the monitoring rules.
Fig. 6 is a flowchart illustrating an operation example of the present invention at the time of monitoring a web access.

### (Reference Numerals)

- 1: Local area network
- 2: Internet
- 3: Client computer (User terminal)
- 10: Web access monitoring system
- 11: Communication module
- 12: Filtering module
- 20: Centralized control server

### DESCRIPTION OF EMBODIMENTS

Hereinafter, embodiments of the present invention will be described with reference to the drawings. The present invention is favorably applied to computer network systems set up in companies, public institutions, schools, or the like. Hereinafter, an example in which the present invention is applied to a client-server computer system will be described.

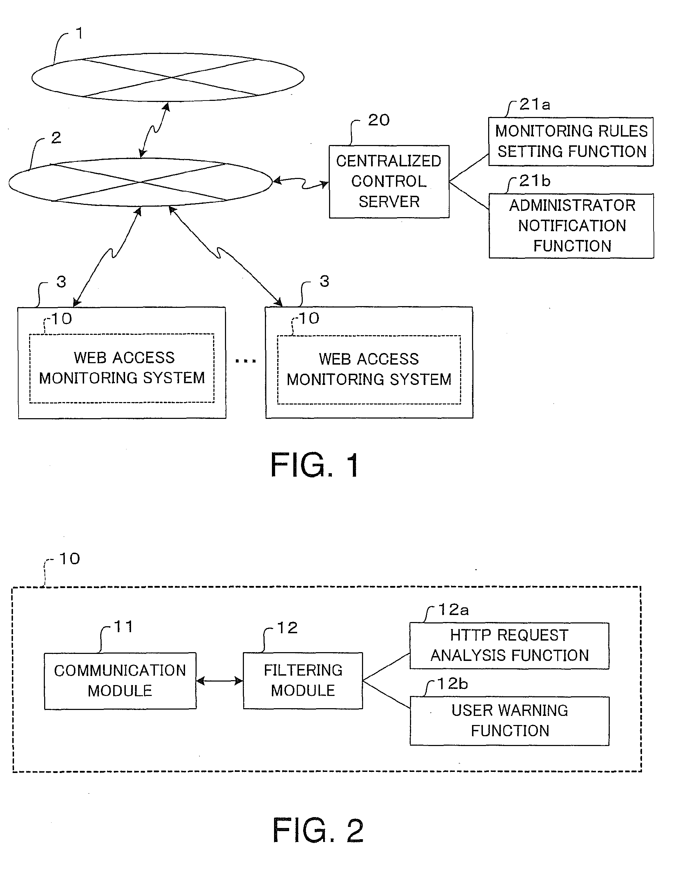

Fig. 1 schematically illustrates an example of the overall configuration of a computer system to which the web access monitoring system of the present invention is applied. In Fig. 1, each client computer 3 is connected to a local area network (hereinafter referred to as "LAN") 2, and is connected to the Internet 1 through the LAN 2. Within the LAN 2, one or more centralized control servers 20 exist to control each client computer (user terminal) 3. The centralized control server 20 has, as functions of the present invention, a monitoring rules setting function 21a and an administrator notification function 21b. The means allowing the computer to issue these functions 21a and 21b is, in the present embodiment, a computer program. By allowing the program to be installed in a predetermined control computer and to operate, the computer is operated as the centralized control server 20 having the monitoring rules setting function 21a and the administrator notification function 21b.

The "monitoring rules" set by the setting function 21a prescribe rules concerning web access monitoring as to, for example, what kind of web viewing is monitored, what conditions , when fulfilled, are initiate warnings, and to whom and by what notification form notification is performed. The monitoring rules comprise setting information such as objects to be monitored, warning conditions, processing forms at the time of warning, and filtering policies on regulation. The monitoring rules are pieces of information which can be set for each user, each group, and each system, the embodiments of which will be described later.

As the centralized control server 20, the number of which is arbitrarily selected, an existing control computer within the LAN 2 can be used. For example, a computer of an administrator or a predetermined server in a company and a computer of each teacher or a predetermined server in a school can be used as the centralized control server 20.

The client computer 3 (hereinafter referred to as "user terminal") is any information processor which can perform data communications with websites (including mobile sites) on the Internet 1 and can execute applications, and includes portable or desktop computers such as PCs (Personal Computers), WSs (Work Stations) and portable information communications devices such as cellular phones and PDAs (Personal Digital Assistants).

A web access monitoring system 10 operating on the user terminal 3 is, in the present embodiment, a client module operating under the control of an OS (operating system), and is installed in each user terminal 3.

Fig. 2 illustrates an example of the configuration of the web access monitoring system 10 shown in Fig. 1 by a basic block diagram. The web access monitoring system 10 comprises a communication module 11 and a filtering module 12. The filtering module 12 is a client module having the web access monitoring function of the present invention and monitors the processing of web viewing performed through the communication module 11. The filtering module 12, in the present embodiment, consists of a computer program. By installing a web access monitoring program in the user terminal 3 and allowing it to operate, it is operated as the user terminal 3 having a web viewing self-monitoring function.

The web access monitoring method of the present invention will be outlined with respect to the above-described system configuration.

The filtering module 12 operating on the user terminal 3 within the LAN 1 communicates with the centralized control server 20 to acquire the monitoring rules. On acquiring the monitoring rules, web access monitoring on the client computer 3 starts.

When the monitoring of web accesses by the filtering module 12 starts, web access monitoring processing continues, even when its user terminal 3 is taken out to a network environment in which it cannot communicate with the centralized control server 20.

The user terminal 3 on which the filtering module 12 operates, when it exists within the LAN 2, i.e., while it is connected with the LAN 2, acquires the latest monitoring rules from the centralized control server 20 at appropriate times (at regular time intervals in the present embodiment).

When a web access occurs at the user terminal, the filtering module 12 monitors its communication contents, and when they match with the warning conditions prescribed in the monitoring rules, displays a warning message on a screen or notifies the centralized control server 20 of the match with the monitoring rules. The centralized control server 20, on receiving a notification from the filtering module 12, promptly transmits an e-mail to an administrator terminal or displays a message when the administrator logs in to the centralized control server 20.

Hereinafter, the web access monitoring method of the present invention will be described in detail.

First, the configuration of the web access monitoring system 10 will be described.

The web access monitoring system 10 comprises, as is exemplified in Fig. 2, the "communication module 11" and the "filteringmodule 12." The communication module 11 is a module controlling the connection with and data transmission/reception to/from other computers, and is a communication program of any type such as a web browser.

The filtering module 12 is a client module which operates in pairs with the communication module 11. The filtering module 12 in the form of LSP (Layered Service Providers) uses an API (Application Program Interface) related to communication control such as a TCP/IP socket interface to perform web access monitoring processing of the present invention. The LSP is a system driver capable of performing specific application processing in the communication data processing of a transport layer of a reference model of an OSI (Open Systems Interconnection).

An API such as a TCP/IP socket interface has recently been provided in almost all OSs installed in general-purpose computers. For Windows^{®} as an OS, for example, communication control software having an API such as a socket interface called "Winsock" is available, allowing application-specific processing to be performed before the start of communications. In the present embodiment, using such an API, communication contents are analyzed at the stage of preparation processing for performing the communications, and web access monitoring processing and regulation processing are performed.

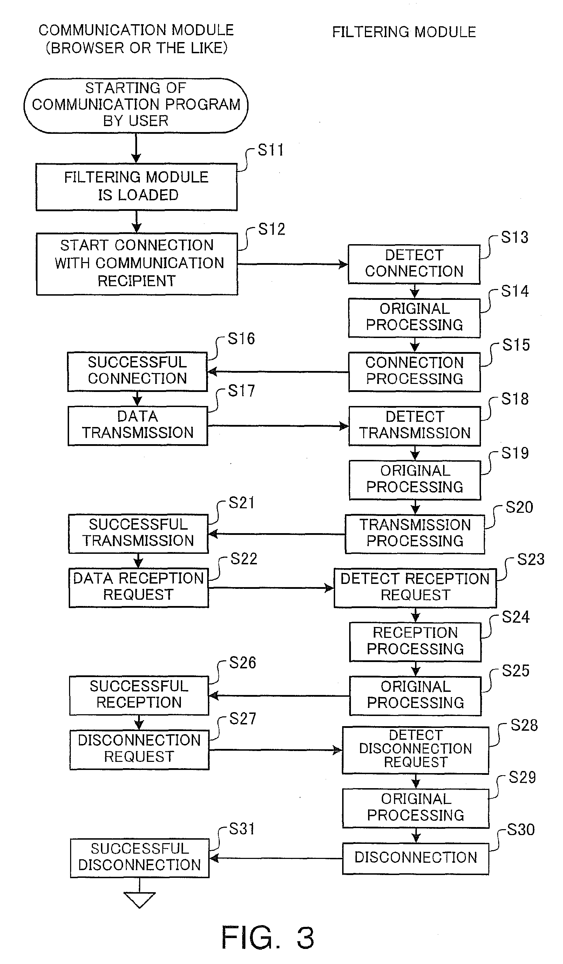

The basic operations of the communication module 11 and the filtering module 12 will now be described with reference to the flowchart shown in Fig. 3.

Fig. 3 is a flowchart illustrating a basic operation example of a web access monitoring system of the present invention and illustrates a mode in which the communication module, such as a browser, and the filtering module operate in pairs. As illustrated in the flowchart in Fig. 3, when the communication module 11 is started by a user, the filtering module in the form of an LSP is loaded (step S11).

When the communication module 11 starts the connection with a communication recipient, the filtering module 12 detects a connection request originating from the communication module 11 (step S12), performs its original processing as needed (step S13), and performs connection processing to be connected with the communication recipient (steps S14, S15). Hereinafter, as shown in steps S16 to S31, at the time of data transmission, data reception, and disconnection, the filtering module 12 detects those request messages, performs original processing (steps S19, S25, S29) as needed, respectively, and then performs the appropriate processing.

The filtering module 12 of the present invention, on detection of the connection request or transmission request (before performing communication processing), analyzes the communication contents, and performs web access monitoring processing and regulation processing in accordance with the above-described "monitoring rules. " By installing the filtering module 12 as part of communication control software (for example, the LSP of Winsock) operating cooperatively with an OS like that of the present embodiment, a communication-module-independent filtering module can be provided.

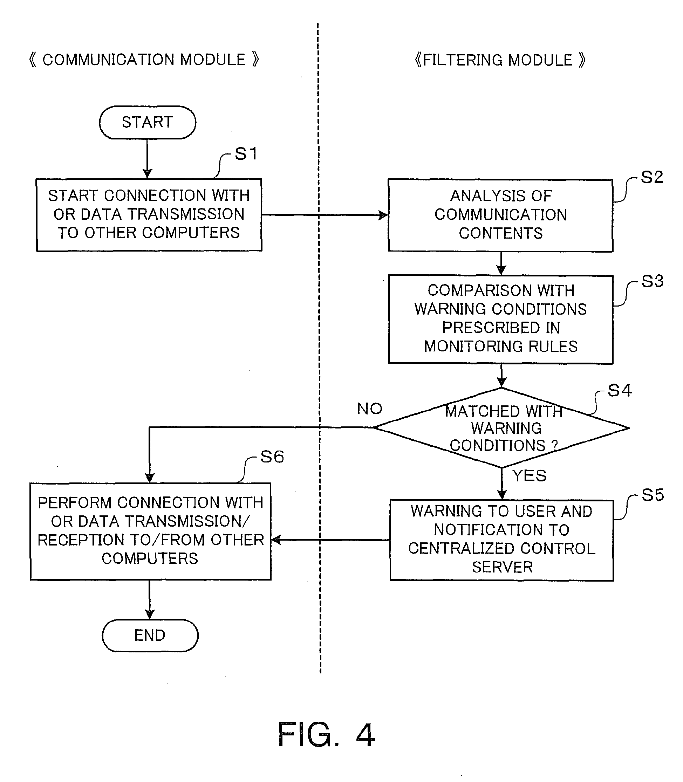

Next, the outline of the web access monitoring processing of the present invention will be described in accordance with the flowchart shown in Fig. 4.

When the communication module 11 of each user terminal 3 attempts to start the connection with or data transmission to other computers (step S1), the filtering module 12 detects the occurrence of its connection request or transmission request, analyzes its communication contents, and detects whether or not a web access to be monitored, as prescribed in the monitoring rules, has occurred. The web access to be monitored is a web access which is unnecessary or improper from a business or educational point of view such as "one unnecessary for business," a "highly illegal one," and "one harmful to education." For example, an appropriate category is set in advance in the monitoring rules in accordance with the object of a person concerned, and access to pieces of web information belonging to the category will be an object to be monitored (step S2).

When the occurrence of a web access to be monitored is detected in step S2, for example, its access quantity (for example, the number of HTTP requests) is counted. An upper limit value prescribed as the warning condition in the monitoring rule is then compared with the counted value in order to judge whether or not the counted value has exceeded the upper limit value (step S3).

When the counted value has exceeded the upper limit value in step S3, it is then judged whether or not the web access is an object to be warned (or an object to be regulated) prescribed in the monitoring rules (step S4). When it is the object to be warned, warning processing is issued in real time to either a user or an administrator or both in accordance with the processing forms at the time the warning was set in the monitoring rules. Then, appropriate warning processing is performed (step S5), and the connection with or data transmission/reception to/from other computers are performed (step S6). Hereinafter, the processing of the above steps S1 to S6 is repeated while the communication module 11 operates. After performing the warning processing in step S5 , the counter storing the counted value is initialized. This prevents a warning from being displayed and prevents regulation from being performed every time after exceeding the upper limit value, allowing for the prevention of any decrease in productivity and any decrease in the motivation of the user.

Next, the web access monitoring method of the present invention will be described in detail with reference to the embodiments shown.

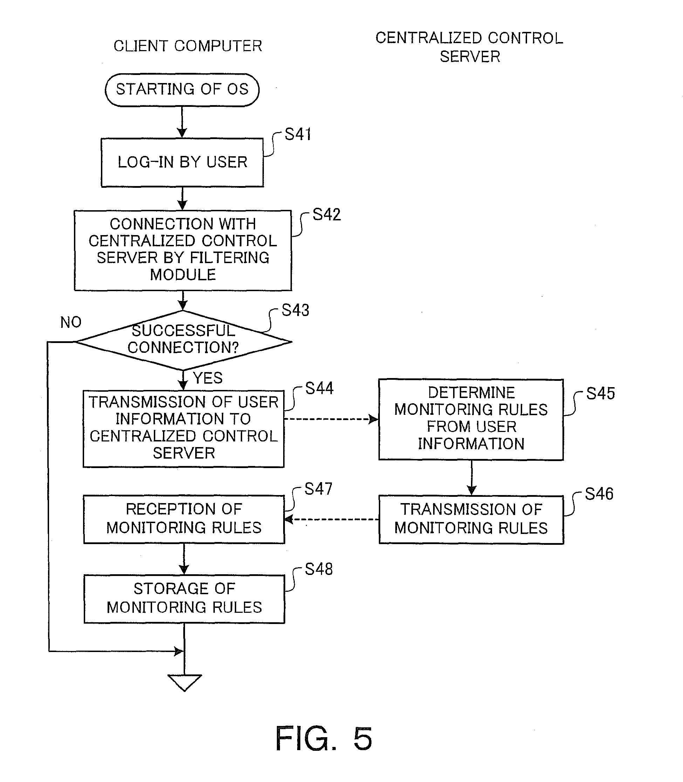

First, an operation example at the time of acquisition of the monitoring rules will be described in accordance with the flowchart shown in Fig. 5.

When an OS (operating system) is started by the turning-on of the user terminal 3 or the like, and a user logs in (step S41), the filtering module 12 detects the log-in, and executes the connection processing with the centralized control server 20 (step S42). The filtering module 12 judges whether or not it has succeeded in making the connection with the centralized control server 20 (step S43), and when it has succeeded in making the connection, transmits user information as a monitoring rules acquisition request message to the centralized control server 20 (step S44) . The centralized control server 20, on receiving the user information, determines the monitoring rules from the user information (step S45), and transmits the monitoring rules, which are the latest or most up-to-date at the time, to the user terminal 3 (step S46) . The filteringmodule 12 of the user terminal 3 acquires the monitoring rules (step S47), and stores them in a storage medium such as a memory card (step S48).

Hereinafter, the filtering module 12 of the user terminal 3, at appropriate times (at regular time intervals in the present embodiment), transmits a regulation rules acquisition request message to the centralized control server 20, and acquires and stores the latest monitoring rules in the storage medium. In step S43, when the filtering module 12 has failed in making the connection with the centralized control server 20, for example, when the portable user terminal 3 is taken outside of the company and used, i.e., when the user terminal 3 is not present within the LAN 2, the monitoring rules acquired the last time are used.

Contents set in the monitoring rules will now be described with reference to the embodiments shown.

The monitoring rules can be set for each user (or each group or each system) in a plurality of ways and are provided with identifiers (hereinafter referred to as "monitoring ID") for determining the monitoring rules. The monitoring rules are set by allowing the administrator to log into the centralized control server 20 from a predetermined communication terminal. The set monitoring rules are given monitoring IDs, brought into correspondence with user IDs, and are stored in a database of the centralized control server 20.

The monitoring rules comprise, for example, (a) information prescribing web viewing monitoring forms (what kind of web viewing is monitored), (b) information prescribing warning conditions, (c) information prescribing alert forms (recipients to be warned, warning information notification forms, or the like), and (d) information prescribing filtering policies concerning access regulation, or the like.

The "web viewing monitoring forms" prescribed in the monitoring rules include a plurality of forms such as (a1) a form of monitoring all accesses, (a2) a form of monitoring only allowed categories out of all the categories indicating the type of pieces of web information, (a3) a form of monitoring only regulated categories out of all the categories, (a4) a form of category monitoring of only override categories (a form of monitoring only the categories of which the access regulation has been invalidated out of the regulated categories or regulated URLs), and (a5) a form of monitoring individual categories (a form of monitoring either one or a plurality of designated categories)

The administrator designates what type of web viewing is monitored by selecting either one of the above plurality of monitoring forms. The "override category" refers to a category of which access regulation to the category has been invalidated by designation of a user (who knows a password) out of all the categories set as objects to be monitored.

The "warning conditions" prescribed in the monitoring rules are conditions for warning the user or the administrator. In the present embodiment, the access quantity relates to web accesses of an object to be monitored, and when the access quantity has exceeded an upper limit value, the object is judged as an object to be warned, and warning processing in accordance with alert forms described later is issued.

The "warning conditions" include a plurality of upper limit values such as (b1) the sum of all the number of requests (the number of web viewing), (b2) the sum of the number of POST requests (the number of data transmissions), and (b3) the sum of POST request size (the sum of transmission data size).

The administrator designates an upper limit value by selecting either one of the above plurality of access quantities to determine when what type of access quantity has been exceeded and to what extent of the upper limit value the warning has been issued.

The "alert forms" prescribed in the monitoring rules include a plurality of forms such as, when the above-described warning conditions (conditions for issuing an alert) are fulfilled, (c1) a form of notifying the administrator by an e-mail (a form of transmitting an alert e-mail to the administrator through the centralized control server), (c2) a form of notifying the administrator by message display on a control screen (a form of displaying the message on the screen after the log-in to the centralized control server), and (c3) a form of notifying the user by displaying a warning screen (a form of displaying a warning window on the display of the user terminal 3).

The administrator designates as to what notification is performed to whom (only the user on the access source, the user and the administrator, or only the administrator) and by what notification form by selecting one or a plurality of alert forms described above.

The "filtering policies" prescribed in the monitoring rules include a plurality of policies such as (d1) regulation (accesses are regulated), (d2) writing regulation (writing to an electronic bulletin board or the like is regulated), (d3) allowance (accesses are allowed), and (d4) override (ones of which the regulation is invalidated by a user who knows a password are regulated).

The administrator designates as to what regulation is performed or if only a warning, not regulation, is performed when the warning conditions are fulfilled by selecting either one from the plurality of policies.

In the present embodiment, as is described as an example of "web viewing monitoring forms , " a desired category is designated as the monitoring rules, and monitoring is performed by category. The administrator is thereby not required to determine monitoring rules for individual URLs , allowing desired monitoring rules to be set easily. For example, when a category of "general amusement" is set to be a category to be monitored, all URLs related to "amusement" will be monitored. For example, when a category of "general education" is set to be a category to be allowed, all URLs related to all categories other than that category will be monitored.

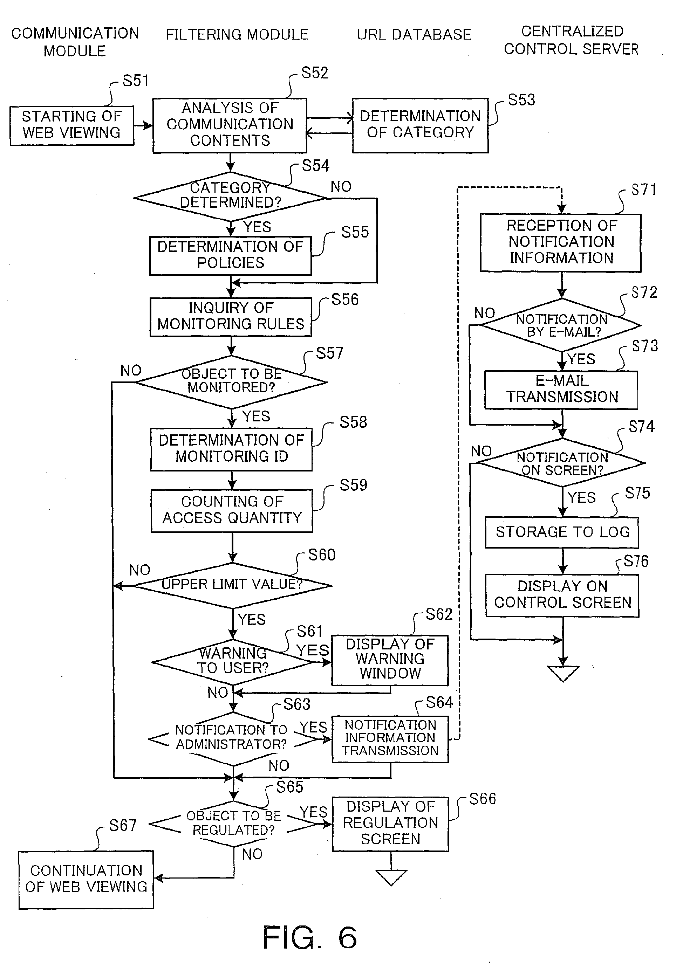

Next, an operation example at the time of monitoring a web access of the present invention will be described in detail in accordance with the flowchart shown in Fig. 6.

When the communication module 11, such as a browser, performs preparation processing for performing communications, the filtering module 12 is loaded before the performance of communications by the communication module 11. When the communication module 11 starts web viewing processing (step S51), the filtering module 12 analyzes its communication contents, detects the web access, detects the URL to be accessed (step S52), and searches the URL database with the URL set as a search key to determine the category to which the URL to be accessed belongs. The URL database is a database in which pieces of URL information present on the Internet are classified by category and are registered with the category and URL brought into correspondence with each other. In the present embodiment, for example, URL database is distributed to the centralized control server 20 through the Internet from a data center, which is provided for keeping and controlling the URL database. The filtering module 12, for example, transmits URL information extracted by analyzing the communication contents and inquires about the category to which the URL belongs (step S53).

It is then determined whether or not the category to which the URL to be accessed belongs (step S54). When the category has been determined, on the basis of the setting information of the filtering policies (regulation, allowance, override, or the like) set in advance by category, the filtering policy for the web access is determined (step S55). When the determined filtering policy is a policy that "The viewing of the web information of the category is not regulated, but monitored, " or when the URL to be accessed is not registered in the URL database and the filtering policy for the category cannot be determined, the monitoring rules are referred to (step S56) and it is judged whether or not the web access detected in the step S52 is an object to be monitored set in the monitoring rules (step S57). When it is an object to be monitored, a counter corresponding to the monitoring ID of the monitoring rule is counted up. For example, when the category to which the detected web access belongs is "bulletin board," the filtering policy thereof is "writing regulation" and, for example, "bulletin board" is designated as a category to be monitored in the monitoring rules, the web access is judged as one to be monitored, and the counter corresponding to the monitoring ID is counted up. Even when a category is not determined, and when all accesses are designated as ones to be monitored in the monitoring rules, the web access is judged as one to be monitored, and the counter corresponding to the monitoring ID is counted up. The value counted up here is a value (number) set in the monitoring rules, or an access quantity which is selected from the number of requests (being the number of web viewings), the number of data transmissions, and the size of transmission data, and is designated accordingly (steps S58, S59).

The filtering module 12 then compares an upper limit value set in the monitoring rules with the counter value, and judges whether or not the counter value (the access quantity) has exceeded the upper limit value (step S60), and when it is judged that the access quantity has reached the upper limit value, warning processing to the user or the administrator or both is issued in real time in accordance with the alert setting (the processing forms at the time of warning) set in the monitoring rules. For example, when the alert setting is set to be e-mail notification to the administrator and notification to the user by the display of a warning screen, as the warning processing, the notification information is transmitted to the centralized control server 20 requesting e-mail notification to the administrator, and warning screen data is transmitted to the user terminal 3 on the access source to perform processing for displaying the warning window on the screen. For example, when the alert setting is set to perform notification through message display on the control screen, as the warning processing, processing for transmitting notification information (an alert message) to the centralized control server is performed.

When the transmission of the notification information to the centralized control server has failed, the notification information is stored, the condition of the communication network (the local area network in the present embodiment) is monitored, and the re-transmission processing of the notification information is attempted as soon as condition changes (steps S61 to S64).

The centralized control server 20, on receiving the notification information from the filtering module of the user terminal (step S71), performs the notification processing to the administrator in accordance with the notification forms (the notification forms set in the monitoring rules) designated in the notification information. For example, for the notification information indicating e-mail notification to the administrator, an alert e-mail is transmitted to the administrator (steps S72 , S73). For the notification information indicating notification by message display on the control screen, the notification information is stored as log data, and an alert message (for example, a message by which a user and an access destination can be recognized) is displayed on the screen of the administrator terminal after the log-in to the centralized control server (steps S74 to S76).

The filtering module 12 performs the warning processing of the steps S61 to S64, judges whether or not the web access detected in step S52 is a web access to be monitored with reference to the filtering policies (step S65), and when it is an object to be monitored (in the present embodiment, the setting of the filtering policy is "regulation" or "override"), forbids the web access (the access request is not performed), and displays a regulation screen indicating the regulation on the display section of the user terminal 3 to end the processing for the web access (step S66). Conversely, for a web access being allowed (other than ones to be regulated), the web viewing is allowed to continue (step S67).

The centralized control server exemplified as being installed in the local area network in the above-described embodiment may be installed on the Internet. The filtering module exemplified as being a computer program may be configured partially by hardware.

### INDUSTRIAL APPLICABILITY

The present invention can be favorably applied to computer network systems set up in companies, public institutions, schools, or the like. It can be also used effectively in the ordinary family in a family environment which parents cannot monitor properly.

## Claims

1. A web access monitoring method in a computer system having a centralized control server for controlling client computers in a local area network, wherein
said centralized control server includes a step for setting monitoring rules including warning conditions and processing forms at the time of warning for web accesses which are unnecessary or improper from a business or educational point of view,
said client computer is provided with a filtering module for performing monitoring processing on web accesses originating from the computer, and
said filtering module includes an analysis step for analyzing the communication contents of said client computer and detecting the occurrence of a web access to an object to be monitored prescribed by said monitoring rules, a counting step for counting an access quantity at the time of detection of said web access, and a warning step for issuing warning processing in real time to a user or an administrator or both in accordance with said processing forms at the time of warning when it is judged that said access quantity has reached an upper limit value prescribed by said warning conditions.

2. The web access monitoring method according to claim 1, wherein said filtering,module communicates with said centralized control server to acquire said monitoring rules at the time of starting of said client computer, and further includes a step for acquiring the latest monitoring rules from said centralized control server at appropriate times while said client computer is connected with said local area network.

3. The web access monitoring method according to claim 1, wherein said monitoring rules can be set by category indicating the type of pieces of web information, and
said filtering module performs said monitoring processing targeting web accesses to the pieces of web information belonging to the category set in the monitoring rules.

4. The web access monitoring method according to claim 3, wherein said counting step counts said access quantity by category.

5. The web access monitoring method according to claim 1, wherein said counting step initializes the counted value of the access quantity when said warning step has issued said warning processing.

6. The web access monitoring method according to claim 1 which is provided with a URL database in which pieces of URL information present on the Internet are classified by category and are registered with the category and URL associated with each other, and
said filtering module further includes a switching step for detecting a URL to be accessed by analyzing said communication contents, judging the category to which said URL to be accessed belongs by referring to said URL database, and switching the contents of said monitoring processing in accordance with said category to which said URL to be accessed belongs.

7. The web access monitoring method according to claim 6 including, as the contents of said monitoring processing switched by said switching step, at least either one of objects to be monitored, said warning conditions, and said processing forms at the time of warning.

8. The web access monitoring method according to claim 1, wherein said warning step issues warning processing to said user and transmits notification information to said centralized control server when it is set that the user and the administrator are to be notified by said monitoring rules.

9. The web access monitoring method according to claim 8, wherein said centralized control server performs, when it has received said notification information, notification processing to said administrator in accordance with said notification forms set in said monitoring rules.

10. The web access monitoring method according to claim 8, wherein said warning step, when the transmission of said notification information to said centralized control server has failed, stores said notification information, monitors the condition of said local area network, and attempts the re-transmission processing of said notification information as soon as the condition changes.

11. The web access monitoringmethod according to claim 1, wherein said monitoring forms prescribed in said monitoring rules include at least either one of a form of monitoring all web accesses as objects to be monitored, a form of monitoring only allowed categories out of all the categories indicating the type of pieces of web information as objects to be monitored, a form of monitoring only regulated categories out of all the categories as objects to be monitored, a form of monitoring only categories for which the access regulation is invalidated out of said regulated categories or regulated URLs as objects to be monitored, and a form of monitoring only designated individual categories as objects to be monitored.

12. The web access monitoring method according to claim 1, wherein said monitoring rules can be set in a plurality of ways for one client,
said filtering module allows a counter for each monitoring ID for discriminating said plurality of monitoring rules to store said access quantity in said counting step, compares the counter value for each said monitoring ID to an upper limit value for each said monitoring ID prescribed in said monitoring conditions , respectively, in said warning step, and when any counter exceeds the upper limit value, performs said warning processing in accordance with said processing forms at the time of warning prescribed in the monitoring rules of the monitoring ID.

13. The web access monitoring method according to claim 1, wherein said access quantity measured in said counting step is an access quantity which is selected from the number of web viewing, the number of data transmissions, and the size of transmission data and is set in said monitoring rules.

14. The web access monitoring method according to claim 1, wherein either one of a plurality of filtering elements including access regulation, writing regulation to external information resources such as an electronic bulletin board, and permission to access is designated and is set as a filtering policy,
said warning step issues said warning processing and controls the regulation or non-regulation of said web access in accordance with said filtering policy set in said monitoring rules.

15. A web access monitoring program in a computer system having a centralized control server for controlling client computers in a local area network, wherein said client computer is allowed to achieve a function of communicating with said centralized control server to acquire monitoring rules in which rules including warning conditions and processing forms at the time of warning for web accesses which are unnecessary or improper from a business or educational point of view are defined, a function of analyzing the communication contents of said client computer and detecting the occurrence of a web access to an object to be monitored prescribed by said monitoring rules, a function of counting an access quantity at the time of the detection of said web access, and a function of issuing warning processing in real time to a user or an administrator or both in accordance with said processing forms at the time of warning when it is judged that said access quantity has reached an upper limit value prescribed by said warning conditions.
